(19) Europäisches Patentamt
European Patent Office
Office européen des brevets

(11) **EP 4 592 418 A1**

(12) **EUROPEAN PATENT APPLICATION**
published in accordance with Art. 153(4) EPC

(43) Date of publication:
**30.07.2025 Bulletin 2025/31**

(21) Application number: 23868626.5

(22) Date of filing: **21.09.2023**

(51) International Patent Classification (IPC):
*C22C 38/02* (2006.01)     *C22C 38/04* (2006.01)
*C22C 38/06* (2006.01)     *C22C 38/14* (2006.01)
*C22C 38/00* (2006.01)     *C21D 8/12* (2006.01)
*H01F 1/147* (2006.01)

(52) Cooperative Patent Classification (CPC):
**C21D 8/12; C22C 38/00; C22C 38/02; C22C 38/04;
C22C 38/06; C22C 38/14; H01F 1/147;** Y02P 10/20

(86) International application number:
**PCT/KR2023/014430**

(87) International publication number:
**WO 2024/063574 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 KR 20220119515**

(71) Applicant: **Hyundai Steel Company
Incheon 22525 (KR)**

(72) Inventors:
• **CHO, Han Hyuk
  Incheon 22525 (KR)**
• **KANG, Chun Ku
  Incheon 22525 (KR)**

(74) Representative: **Viering, Jentschura & Partner
mbB
Patent- und Rechtsanwälte
Am Brauhaus 8
01099 Dresden (DE)**

(54) **NON-ORIENTED ELECTRICAL STEEL SHEET AND MANUFACTURING METHOD THEREFOR**

(57)     The present disclosure provides a method of manufacturing a non-oriented electrical steel sheet, the method including preparing a slab comprising, by weight%, carbon (C): more than 0 % but not more than 0.002 %, silicon (Si): 2.3 % to 2.8 %, manganese (Mn): 0.2 % to 0.28 %, aluminum (Al): 0.32 % to 0.45 %, phosphorus (P): more than 0 % but not more than 0.015 %, sulfur (S): more than 0 % but not more than 0.002 %, nitrogen (N): more than 0 % but not more than 0.005 %, titanium (Ti): more than 0 % but not more than 0.002 %, a balance of iron (Fe), and inevitable impurities; forming a hot-rolled sheet by hot rolling the slab, forming a hot-rolled annealed sheet by preliminarily annealing the hot-rolled sheet, forming a cold-rolled sheet by cold rolling the hot-rolled annealed sheet, and forming a cold-rolled annealed sheet by cold annealing the cold-rolled sheet, wherein manganese (Mn) and aluminum (Al) included in the slab satisfy

Equation 1 $(0.10 \leq 1.3 \times [Mn] - 0.46 \times [Al] \leq 0.18)$.

EP 4 592 418 A1

# FIG. 1

```
┌─────────────────────┐
│  HOT ROLLING STEP   │──── S100
└─────────────────────┘
          │
          ▼
┌─────────────────────┐
│     PRELIMINARY     │
│   ANNEALING STEP    │──── S200
└─────────────────────┘
          │
          ▼
┌─────────────────────┐
│  COLD ROLLING STEP  │──── S300
└─────────────────────┘
          │
          ▼
┌─────────────────────┐
│ COLD ANNEALING STEP │──── S400
└─────────────────────┘
          │
          ▼
┌─────────────────────┐
│    COATING STEP     │──── S500
└─────────────────────┘
```

## Description

### Technical Field

The present disclosure relates to a non-oriented electrical steel sheet and a method of manufacturing the same.

### Background Art

Recently, there has been an increasing demand for environmental preservation and energy efficiency improvement. In particular, the transition from internal combustion engine vehicles to electric vehicles or hybrid vehicles has been accelerated.

Non-oriented electrical steel sheets are mainly used as materials for transformers and rotating machines such as motors. To improve the efficiency of electric vehicle driving motors, improvement in the magnetic properties of non-oriented electrical steel sheets is required.

The properties required for non-oriented electrical steel sheets are high magnetic flux density and low iron loss. Iron loss is energy loss caused by core materials, and in order to reduce iron loss in non-oriented electrical steel sheets, a sheet thickness needs to be reduced or a resistivity needs to be increased. However, when the sheet thickness is reduced, productivity may decrease during the process, and when the Si content is increased so as to increase the resistivity, cold workability is poor, which may decrease productivity.

Related technologies include Korean Patent Registration No. 10-1141283 (entitled "Grain-Oriented Electrical Steel Sheet Having Low Core Loss and High Magnetic Flux Density").

### Disclosure of Invention

### Technical Problem

Embodiments of the present disclosure may control a microstructure of a hot-rolled annealed sheet by adjusting the content of manganese (Mn) and aluminum (Al) included in a steel sheet, and improve magnetic properties of a final product.

### Solution to Problem

According to an aspect of the present disclosure, provided is a method of manufacturing a non-oriented electrical steel sheet, the method including preparing a slab including, by weight%, carbon (C): more than 0 % but not more than 0.002 %, silicon (Si): 2.3 % to 2.8 %, manganese (Mn): 0.2 % to 0.28 %, aluminum (Al): 0.32 % to 0.45 %, phosphorus (P): more than 0 % but not more than 0.015 %, sulfur (S): more than 0 % but not more than 0.002 %, nitrogen (N): more than 0 % but not more than 0.005 %, titanium (Ti): more than 0 % but not more than 0.002 %, a balance of iron (Fe), and inevitable impurities, forming a hot-rolled sheet by hot rolling the slab, forming a hot-rolled annealed sheet by preliminarily annealing the hot-rolled sheet, forming a cold-rolled sheet by cold rolling the hot-rolled annealed sheet, and forming a cold-rolled annealed sheet by cold annealing the cold-rolled sheet, wherein manganese (Mn) and aluminum (Al) included in the slab satisfy Equation 1 below.

$$\text{<Equation 1>}$$

$$0.10 \leq 1.3 \times [Mn] - 0.46 \times [Al] \leq 0.18$$

(In Equation 1, [Mn] and [Al] represent weight% of manganese (Mn) and aluminum (Al) included in the slab, respectively.)

In the present embodiment, an average grain size ($GS_1$) at a point t/4 (t denotes a thickness of the hot-rolled annealed sheet) in a thickness direction from a surface of the hot-rolled annealed sheet, and an average grain size ($GS_2$) at a point t/2 (t denotes the thickness of the hot-rolled annealed sheet) in the thickness direction from the surface of the hot-rolled annealed sheet may satisfy Equation 2 below.

$$\text{<Equation 2>}$$

$$0.7 \leq (GS_1 / GS_2) \leq 0.9$$

In the present embodiment, an aspect ratio of grains at a point t/2 (t denotes a thickness of the hot-rolled annealed

3

sheet) in a thickness direction from a surface of the hot-rolled annealed sheet may be 0.48 or more.

In the present embodiment, the aspect ratio may be derived by Equation 3 below.

$$\text{<Equation 3>}$$

$$\text{Aspect Ratio} = (L_1 / L_2)$$

(In Equation 3, $L_1$ denotes a length of a short axis of the grains at the point t/2 (t denotes the thickness of the hot-rolled annealed sheet) in the thickness direction from the surface of the hot-rolled annealed sheet, and $L_2$ denotes a length of a long axis of the grains at the point t/2 (t denotes the thickness of the hot-rolled annealed sheet) in the thickness direction from the surface of the hot-rolled annealed sheet.)

In the present embodiment, the method may further include forming a coating layer on the cold-rolled annealed sheet.

In the present embodiment, the forming of the hot-rolled annealed sheet by preliminarily annealing the hot-rolled sheet may include annealing the hot-rolled sheet at a soaking temperature of 950 °C to 1,100 °C.

In the present embodiment, the forming of the cold-rolled annealed sheet by cold annealing the cold-rolled sheet may include annealing the cold-rolled sheet at a soaking temperature of 900 °C to 1,100 °C.

According to another aspect of the present disclosure, provided is a oriented electrical steel sheet including, by weight%, carbon (C): more than 0 % but not more than 0.002 %, silicon (Si): 2.3 % to 2.8 %, manganese (Mn): 0.2 % to 0.28 %, aluminum (Al): 0.32 % to 0.45 %, phosphorus (P): more than 0 % but not more than 0.015 %, sulfur (S): more than 0 % but not more than 0.002 %, nitrogen (N): more than 0 % but not more than 0.005 %, titanium (Ti): more than 0 % but not more than 0.002 % a balance of iron (Fe), and inevitable impurities, wherein manganese (Mn) and aluminum (Al) included in the non-oriented electrical steel sheet satisfy Equation 4 below.

$$\text{<Equation 4>}$$

$$0.10 \le 1.3 \times [Mn] - 0.46 \times [Al] \le 0.18$$

(In Equation 4, [Mn] and [Al] represent weight % of manganese (Mn) and aluminum (Al) included in the non-oriented electrical steel sheet, respectively.)

In the present embodiment, the non-oriented electrical steel sheet may have iron loss of 2.8 W/kg or less (with respect to W15/50) and magnetic flux density of 1.68 T or more (with respect to B50).

In the present embodiment, the non-oriented electrical steel sheet may have a yield strength (YP) of 350 MPa or more and a tensile strength (TS) of 450 MPa or more.

Other aspects, features, and advantages of the present disclosure will become more apparent from the detailed description, the claims, and the drawings for implementing the present disclosure.

**Advantageous Effects of Invention**

According to an embodiment of the present disclosure as described above, a microstructure of a hot-rolled annealed sheet may be controlled by adjusting the content of manganese (Mn) and aluminum (Al) included in a steel sheet, and magnetic properties of a final product may be improved. The scope of the present disclosure is not limited by these effects.

**Brief Description of Drawings**

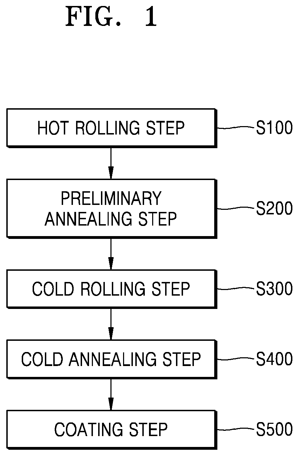

FIG. 1 is a flowchart schematically illustrating a method of manufacturing a non-oriented electrical steel sheet, according to an embodiment of the present disclosure.

**Mode for the Invention**

As the present disclosure allows for various changes and numerous embodiments, certain embodiments will be illustrated in the drawings and described in the detailed description. Effects and features of the present disclosure, and methods for achieving them will be clarified with reference to embodiments described below in detail with reference to the drawings. However, the present disclosure is not limited to the following embodiments and may be embodied in various forms.

Although the terms "first," "second," etc. may be used to describe various elements, these elements should not be limited by these terms. These terms are only used to distinguish one element from another.

As used herein, the singular forms "a," "an," and "the" are intended to include the plural forms as well, unless the context clearly indicates otherwise.

It will be further understood that the terms "comprises" or "comprising" used herein specify the presence of stated features or components, but do not preclude the presence or addition of one or more other features or components.

It will be further understood that, when a layer, region, or component is referred to as being "on" another layer, region, or component, it may be directly on the other layer, region, or component, or may be indirectly on the other layer, region, or component with intervening layers, regions, or components therebetween.

Sizes of components in the drawings may be exaggerated or reduced for convenience of explanation. For example, sizes and thicknesses of elements in the drawings are arbitrarily illustrated for convenience of explanation, and thus the present disclosure is not limited thereto.

"A and/or B" is used herein to select only A, select only B, or select both A and B. Also, "at least one of A and B" is used herein to select only A, select only B, or select both A and B.

In the following embodiment, the meaning that a wiring "extends in a first direction or a second direction" includes not only extending in a linear shape, but also extending in a zigzag or a curved shape in the first direction or the second direction.

In the following embodiments, "a plan view of an object" refers to "a view of an object seen from above, and "a cross-sectional view of an object" refers to "a view of an object vertically cut and seen from the side. In the following embodiments, when elements "overlap," it may mean that the elements overlap in a "plan view" and a "cross-sectional view".

Hereinafter, embodiments of the present disclosure will be described in detail with reference to the accompanying drawings, wherein the same or corresponding elements are denoted by the same reference numerals throughout.

FIG. 1 is a flowchart schematically illustrating a method of manufacturing a non-oriented electrical steel sheet, according to an embodiment of the present disclosure.

Referring to FIG. 1, the method of manufacturing the non-oriented electrical steel sheet according to an embodiment may include a hot rolling step (S100), a preliminary annealing step (S200), a cold rolling step (S300), a cold annealing step (S400), and a coating step (S500).

In the method of manufacturing the non-oriented electrical steel sheet according to an embodiment of the present disclosure, a semi-finished product to be hot-rolled may be a slab. The slab in a semi-finished state may be secured through a continuous casting process after obtaining molten steel of a certain composition through a steel making process.

In an embodiment, the slab may include, by weight%, carbon (C): more than 0 % but not more than 0.002 %, silicon (Si): 2.3 % to 2.8 %, manganese (Mn): 0.2 % to 0.28 %, aluminum (Al): 0.32 % to 0.45 %, phosphorus (P): more than 0 % but not more than 0.015 %, sulfur (S): more than 0 % but not more than 0.002 %, nitrogen (N): more than 0 % but not more than 0.005 %, titanium (Ti): more than 0 % but not more than 0.002 %, a balance of iron (Fe), and inevitable impurities.

Carbon (C) may be a component that increases iron loss by forming a carbide such as TiC or NbC. In an embodiment, carbon (C) may be included in an amount more than 0 % but not more than 0.002 % by weight% with respect to the total weight of the slab. When carbon (C) is included in the amount more than 0.002 % with respect to the total weight of the slab, magnetic properties of the manufactured non-oriented electrical steel sheet may be degraded by causing magnetic aging. When carbon (C) is included in the amount more than 0 % but not more than 0.002 % by weight% with respect to the total weight of the slab, a magnetic aging phenomenon may be suppressed.

Silicon (Si) may be a component that decreases eddy current loss by increasing resistivity. In an embodiment, silicon (Si) may be included in an amount of 2.3 % to 2.8 % by weight% with respect to the total weight of a slab. When silicon (Si) is included in an amount less than 2.3 % with respect to the total weight of the slab, it may be difficult to obtain a low iron loss value. On the other hand, as the content of silicon (Si) included in the slab increases, an investment rate and a magnetic flux density may decrease. In addition, when silicon (Si) is included in an amount more than 2.8 % with respect to the total weight of the slab, brittleness increases and cold rolling property decreases, which may degrade productivity.

Manganese (Mn) may be a component that increases resistivity together with silicon (Si) and improves the texture. In an embodiment, manganese (Mn) may be included in an amount of 0.2 % to 0.28 % by weight% with respect to the total weight of the slab. When manganese (Mn) is included in an amount less than 0.2 % with respect to the total weight of the slab, a fine MnS precipitate may be formed to suppress grain growth. On the other hand, when manganese (Mn) is included in an amount more than 0.28 % with respect to the total weight of the slab, a coarse MnS precipitate may be formed to degrade magnetic properties such as a reduction in the magnetic flux density. When manganese (Mn) is included in an amount of 0.2 % to 0.28 % by weight% with respect to the total weight of the slab, a microstructure and a texture in the slab (or a non-oriented electrical steel sheet) may be controlled.

Aluminum (Al) may be a component that increases resistivity together with silicon (Si) and decreases eddy current loss. In addition, aluminum (Al) may reduce magnetic anisotropy and thus reduce a magnetic deviation. In an embodiment, aluminum (Al) may be included in an amount of 0.32 % to 0.45 % by weight% with respect to the total weight of the slab. When aluminum (Al) is included in an amount less than 0.32 % with respect to the total weight of the slab, it may be difficult to obtain a low iron loss value. In addition, the magnetic property deviation may be increased by forming a fine nitride. On the other hand, when aluminum (Al) is included in an amount more than 0.45 % with respect to the total weight of the slab, cold rolling properties may degrade, and nitride may be excessively formed to reduce the magnetic flux density, which may degrade magnetic properties. When aluminum (Al) is included in an amount of 0.32 % to 0.45 % by weight% with respect to the total weight of the slab, the microstructure and the texture in the slab (or the non-oriented electrical steel sheet) may be controlled.

Phosphorus (P) which is a grain boundary segregation element may be a component that develops a texture. In an embodiment, phosphorus (P) may be included in an amount more than 0 % but not more than 0.015 % by weight% with respect to the total weight of the slab. When phosphorus (P) is included in an amount more than 0.015 % with respect to the total weight of the slab, grain growth may be suppressed due to a segregation effect, magnetic properties may degrade, and cold rolling property may degrade.

Sulfur (S) may increase iron loss and suppress grain growth by forming a precipitate such as MnS and CuS. In an embodiment, sulfur (S) may be included in an amount more than 0 % but not more than 0.002 % by weight% with respect to the total weight of the slab. When sulfur (S) is included in an amount more than 0.002 % with respect to the total weight of the slab, a precipitate such as MnS and CuS is formed, which may increase iron loss and suppress grain growth.

Nitrogen (N) may increase iron loss and suppress grain growth by forming a precipitate such as AlN, TiN, or NbN. In an embodiment, nitrogen (N) may be included in an amount more than 0 % but not more than 0.002 % by weight% with respect to the total weight of the slab. When nitrogen (N) is included in an amount more than 0.002 % with respect to the total weight of the slab, a precipitate such as AlN, TiN, or NbN is formed, which may increase iron loss and suppress grain growth.

Titanium (Ti) may suppress grain growth by forming a precipitate such as TiC and TiN. In an embodiment, titanium (Ti) may be included in an amount more than 0 % but not more than 0.002 % by weight% with respect to the total weight of the slab. When titanium (Ti) is included in an amount more than 0.002 % with respect to the total weight of the slab, a precipitate such as TiC and TiN may be formed, which may deteriorate magnetic properties.

In the hot rolling step (S100), a hot-rolled sheet may be obtained by heating the slab and then hot-rolling the heated slab. First, in the hot rolling step (S100), the slab may be heated. When the slab heating temperature is too high, a precipitate such as C, S, or N in the slab is reused to form fine precipitates in a subsequent rolling and annealing step, which may suppress grain growth and deteriorate magnetic properties. On the other hand, when the slab heating temperature is too low, rolling load may increase during hot rolling, which may decrease the rolling property. In an embodiment, the slab heating temperature in the hot rolling step (S100) may be 1,000 °C to 1,200 °C. Preferably, the slab heating temperature in the hot rolling step (S100) may be 1,110 °C to 1,150 °C.

In addition, in the hot rolling step (S100), the heated slab may be rolled at a certain finishing delivery temperature (FDT). In an embodiment, the FDT of the hot rolling step (S100) may be 860 °C to 900 °C.

In addition, in the hot rolling step (S100), the hot-rolled sheet may be cooled to a certain coiling temperature (CT) and coiled. In an embodiment, the CT may be 550 °C to 650 °C.

In an embodiment, a thickness of the hot-rolled sheet may be 1.8 mm to 2.6 mm after hot rolling. At this time, when the thickness of the hot-rolled sheet exceeds 2.6 mm, a cold rolling reduction rate increases, which may deteriorate the texture.

The preliminary annealing step (S200) may be performed after the hot rolling step (S100). In the preliminary annealing step (S200), the coiled and cooled hot-rolled sheet may be annealed. At this time, the annealed hot-rolled sheet may be referred to as a hot-rolled annealed sheet. Uniformity and cold rolling property of a microstructure of the hot-rolled sheet may be secured through the preliminary annealing step (S200).

The preliminary annealing step (S200) may be performed at an annealing temperature (e.g., a soaking temperature) of 950 °C to 1,100 °C, a holding time of 30 seconds to 120 seconds, and a heating rate of 10 °C/s or more. At this time, when the annealing temperature of the preliminary annealing step (S200) is too low, fine inclusions such as a carbide and a nitride are formed from a surface layer, and the inclusions do not sufficiently grow, which may deteriorate the magnetic properties of a final product. On the other hand, when the annealing temperature of the preliminary annealing step (S200) is too high, not only inclusions distribution but also grains excessively grow, resulting in a large grain size deviation and a large amount of oxidation, which may adversely affect the final product.

In the preliminary annealing step (S200), the hot-rolled annealed sheet may be cooled at a cooling rate of 30 °C/s. At this time, the hot-rolled annealed sheet may be cooled to 200 °C to 250 °C. In addition, an oxide layer formed on the surface of the hot-rolled annealed sheet may be removed using an acid cleaning solution after the preliminary annealing step (S200).

The cold rolling step (S300) may be performed after the preliminary annealing step (S200). In the cold rolling step (S300), the hot-rolled annealed sheet may be cold-rolled. At this time, the cold-rolled hot-rolled annealed sheet may be called a cold-rolled sheet. In the cold rolling step (S300), the hot-rolled annealed sheet on which acid cleaning is performed may be cold-rolled to a thickness of 0.35 mm or less. At this time, hot rolling may be performed by raising a sheet temperature (e.g., the temperature of the hot-rolled annealed sheet) to 150 °C to 200 °C in order to provide rolling properties. A final reduction rate in the cold rolling step (S300) may be 80 % to 85 %.

After the cold rolling step (S300), the cold annealing step (S400) may be performed. In the cold annealing step (S400), the cold-rolled sheet may be annealed. At this time, the annealed cold-rolled sheet may be called an annealed cold sheet.

The cold annealing step (S400) may be performed at a temperature that derives the optimal grain size considering the final magnetic and mechanical properties. For example, the cold annealing step (S400) may be performed at an annealing temperature (e.g., a soaking temperature) of 900 °C to 1,100 °C, a holding time of 30 seconds to 120 seconds, and a heating rate of 20 °C/s or more. When the annealing temperature in the cold annealing step (S400) is too low, the grain size is fine, which may increase hysteresis loss. On the other hand, when the annealing temperature in the cold annealing step (S400) is too high, the grain size increases too much, which may increase the eddy current loss.

In addition, the cold annealing step (S400) may be performed under a mixture atmosphere condition to prevent surface oxidation and nitriding. For example, the surface state of the cold-rolled annealed sheet may be induced more smoothly through a mixture atmosphere of nitrogen and hydrogen.

In the cold annealing step (S400), the cold-rolled annealed sheet may be cooled at a cooling rate of 30 °C/s or more. At this time, the cold-rolled annealed sheet may be cooled to 200 °C to 250 °C.

After the cold annealing step (S400), the coating step (S500) may be performed. In the coating step (S500), a coating layer may be formed on the cold-rolled annealed sheet. The coated layer is formed through the coating step (S500), and thus, punching property may be improved, and insulation property may be ensured.

In an embodiment, the non-oriented electrical steel sheet may include, by weight%, carbon (C): more than 0 % but not more than 0.002 %, silicon (Si): 2.3 % to 2.8 %, manganese (Mn): 0.2 % to 0.28 %, aluminum (Al): 0.32 % to 0.45 %, phosphorus (P): more than 0 % but not more than 0.015 %, sulfur (S): more than 0 % but not more than 0.002 %, nitrogen (N): more than 0 % but not more than 0.005 %, titanium (Ti): more than 0 % but not more than 0.002 %, a balance of iron (Fe), and inevitable impurities.

An average grain size of the non-oriented electrical steel sheet manufactured through the method of manufacturing the non-oriented electrical steel sheet according to an embodiment of the present disclosure may be 80 $\mu$m to 150 $\mu$m. The manufactured non-oriented electrical steel sheet may have iron loss of 2.8 W/kg or less (with respect to W15/50) and magnetic flux density of 1.68 T or more (with respect to B50). The manufactured non-oriented electrical steel sheet may have a yield strength (YP) of 350 MPa or more and a tensile strength (TS) of 450 MPa or more.

Accordingly, the inventors of the present disclosure have confirmed through excessively repeated experiments that when the content of manganese (Mn) and aluminum (Al) in the slab is adjusted, the microstructure after the preliminary annealing step (S200) may be controlled, and through this, the magnetic properties of the final product (e.g., the non-oriented electrical steel sheet) may be improved. The method of manufacturing the non-oriented electrical steel sheet according to an embodiment of the present disclosure may satisfy Equations 1 and 2 below.

<Equation 1>

$$0.10 \leq 1.3 \times [Mn] - 0.46 \times [Al] \leq 0.18$$

In Equation 1, [Mn] and [Al] represent the weight % of manganese (Mn) and aluminum (Al) in the slab, respectively.

When the composition conditions of manganese (Mn) and aluminum (Al) in the slab satisfy Equation 1, the microstructure of the hot-rolled annealed sheet after the preliminary annealing step (S200) may be uniform.

<Equation 2>

$$0.7 \leq (GS_1 / GS_2) \leq 0.9$$

In Equation 2, $GS_1$ denotes an average grain size at a point t/4 (t denotes a thickness of the hot-rolled annealed sheet) in a thickness direction from a surface of the hot-rolled annealed sheet, and $GS_2$ denotes an average grain size at a point t/2 (t denotes the thickness of the hot-rolled annealed sheet) in the thickness direction from the surface of the hot-rolled annealed sheet. The average grain size may be measured using electron backscatter diffraction (EBSD), and measured data may be obtained using TSL OIM analysis software. However, the present disclosure is not limited thereto. The average grain size may be measured using methods other than the EBSD.

At this time, the hot-rolled annealed sheet may mean a sheet on which the hot rolling step (S100) and the preliminary annealing step (S200) have been performed.

In an embodiment, an aspect ratio of grains at the point t/2 (t denotes the thickness of the hot-rolled annealed sheet) in the thickness direction from the surface of the hot-rolled annealed sheet may be 0.48 or more. Preferably, the aspect ratio of the grains at the point t/2 (t denotes the thickness of the hot-rolled annealed sheet) in the thickness direction from the surface of the hot-rolled annealed sheet may be 0.48 to 0.6. That is, the aspect ratio of the grains at the point t/2 (t denotes the thickness of the hot-rolled annealed sheet) in the thickness direction from the surface of the hot-rolled annealed sheet may be 0.48 to 0.6.

At this time, the aspect ratio may be derived by Equation 3 below.

<Equation 3>

$$\text{Aspect Ratio} = (L_1 / L_2)$$

In Equation 3, $L_1$ denotes a length of a short axis of the grains at the point t/2 (t denotes the thickness of the hot-rolled annealed sheet) in the thickness direction from the surface of the hot-rolled annealed sheet, and $L_2$ denotes a length of a long axis of the grains at the point t/2 (t denotes the thickness of the hot-rolled annealed sheet) in the thickness direction from the surface of the hot-rolled annealed sheet. That is, the aspect ratio may be a value obtained by dividing the length of the short axis of the grains by the length of the long axis at the point t/2 (t denotes the thickness of the hot-rolled annealed sheet) in the thickness direction from the surface of the hot-rolled annealed sheet.

The aspect ratio of the grains at the point t/2 (t denotes the thickness of the hot-rolled annealed sheet) in the thickness direction from the surface of the hot-rolled annealed sheet may be obtained using the EBSD. More specifically, the EBSD may be measured 10 times at random locations at a magnification of 500x, and data obtained through this may be obtained using a program provided by default in the TSL OIM Analysis software. However, the present disclosure is not limited thereto. The aspect ratio may be measured using methods other than the EBSD.

At this time, the hot-rolled annealed sheet may mean a sheet that has undergone the hot rolling step (S100) and the preliminary annealing step (S200).

Generally, when observing the microstructure of a hot-rolled sheet that has undergone the hot rolling step (S100), a central layer of the hot-rolled sheet (e.g., the point t/2 in the thickness direction from the surface of the hot-rolled sheet) includes long and elongated grains, and a surface layer the hot-rolled sheet (e.g., the point t/4 in the thickness direction from the surface of the hot-rolled sheet) includes fine grains. At this time, when the hot-rolled sheet is annealed, the microstructure may become uniform. That is, when the hot-rolled sheet is annealed through the preliminary annealing step (S200), the microstructure may become uniform. However, when heat treatment conditions and component conditions are not satisfied in the preliminary annealing step (S200), an average grain size deviation between the surface layer and the central layer may increase, and the grains in the central layer may be configured in a long and elongated shape.

In addition, the average grain size in the central layer (e.g., the point t/2 in the thickness direction from the surface of the hot-rolled annealed sheet) may generally be larger than the average grain size in the surface layer (e.g., the point t/4 in the thickness direction from the surface of the hot-rolled annealed sheet) of the hot-rolled annealed sheet. When the average grain size in the central layer of the hot-rolled annealed sheet is much larger than the average grain size in the surface layer of the hot-rolled annealed sheet, a value of $(GS_1 / GS_2)$ may decrease, which may mean that the average grain size deviation between the central layer of the hot-rolled annealed sheet and the surface layer of the hot-rolled annealed sheet is large.

When the average grain size of the surface layer of the hot-rolled annealed sheet increases, the value of $(GS_1 / GS_2)$ may increase. When the value of $(GS_1 / GS_2)$ is 0.7 or more, it may mean that the grain size deviation between the center layer of the hot-rolled annealed sheet and the surface layer of the hot-rolled annealed sheet is small, which may mean that the microstructure of the hot-rolled annealed sheet is uniform.

As described above, when the composition conditions of manganese (Mn) and aluminum (Al) in the slab satisfy Equation 1, the microstructure of the hot-rolled annealed sheet after the preliminary annealing step (S200) may satisfy Equation 2. That is, when the composition conditions of manganese (Mn) and aluminum (Al) in the slab satisfy Equation 1, as described above, the microstructure of the hot-rolled annealed sheet may be uniformly formed.

In addition, when the length of the short axis of the grains in the central layer of the hot-rolled annealed sheet is much smaller than the length of the long axis of the grains in the central layer of the hot-rolled annealed sheet, the aspect ratio may be reduced, which may mean that the grains in the central layer of the hot-rolled annealed sheet are configured in an elongated shape. On the other hand, when the length of the short axis of the grains in the central layer of the hot-rolled annealed sheet increases, a value of the aspect ratio may increase. When the aspect ratio is 0.48 or more, it may mean that a difference between the length of the short axis of the grains in the central layer of the hot-rolled annealed sheet and the length of the long axis of the grains in the central layer of the hot-rolled annealed sheet is small, which may mean that the microstructure of the hot-rolled annealed sheet is uniform.

In addition, as described above, when the component conditions of manganese (Mn) and aluminum (Al) in the slab satisfy Equation 1, the aspect ratio of the microstructure of the hot-rolled annealed sheet after the preliminary annealing step (S200) may be 0.48 to 0.6. That is, when the component conditions of manganese (Mn) and aluminum (Al) in the slab satisfy Equation 1, as described above, the microstructure of the hot-rolled annealed sheet may be uniformly formed.

In an embodiment, the content of manganese (Mn) and aluminum (Al) included in the non-oriented electrical steel sheet may satisfy Equation 4 below.

<Equation 4>

$$0.10 \leq 1.3 \times [Mn] - 0.46 \times [Al] \leq 0.18$$

In Equation 4, [Mn] and [Al] represent the weight % of manganese (Mn) and aluminum (Al) included in the non-oriented electrical steel sheet, respectively.

<Experimental Example>

Hereinafter, the present disclosure will be described in more detail through the experimental example. However, the following experimental example is intended to explain the present disclosure in more detail, and the scope of the present disclosure is not limited by the following experimental example. The following experimental example may be appropriately modified and changed by one of ordinary skill in the art within the scope of the present disclosure.

[Table 1]

| Classif ication | Component (weight%) | | | | | | | |
|---|---|---|---|---|---|---|---|---|
| | C | Si | Mn | Al | P | S | N | Ti |
| Embod iment 1 | 0.0015 | 2.31 | 0.21 | 0.33 | 0.0072 | 0.0018 | 0.0012 | 0.0011 |
| Embod iment 2 | 0.0019 | 2.78 | 0.28 | 0.44 | 0.0068 | 0.0017 | 0.0015 | 0.0013 |
| Embod iment 3 | 0.0012 | 2.65 | 0.23 | 0.36 | 0.0059 | 0.0019 | 0.0013 | 0.0012 |
| Embod iment 4 | 0.0013 | 2.44 | 0.22 | 0.40 | 0.0069 | 0.0016 | 0.0014 | 0.0011 |
| Embod iment 5 | 0.0017 | 2.68 | 0.27 | 0.38 | 0.0065 | 0.0018 | 0.0015 | 0.0014 |
| Embod iment 6 | 0.0018 | 2.54 | 0.23 | 0.37 | 0.0069 | 0.0017 | 0.0013 | 0.0012 |
| Embod iment 7 | 0.0017 | 2.61 | 0.25 | 0.41 | 0.0061 | 0.0019 | 0.0014 | 0.0012 |
| Comp arative Examp le 1 | 0.0013 | 2.41 | 0.11 | 0.18 | 0.0078 | 0.0019 | 0.0017 | 0.0018 |
| Comp arative Examp le 2 | 0.0014 | 2.68 | 0.13 | 0.33 | 0.0069 | 0.0017 | 0.0019 | 0.0019 |
| Comp arative Examp le 3 | 0.0013 | 2.71 | 0.26 | 0.12 | 0.0071 | 0.0019 | 0.0018 | 0.0017 |
| Comp arative Examp le 4 | 0.0019 | 2.38 | 0.33 | 0.51 | 0.0065 | 0.0018 | 0.0017 | 0.0017 |
| Comp arative Examp le 5 | 0.0018 | 2.62 | 0.27 | 0.63 | 0.0064 | 0.0016 | 0.0019 | 0.0019 |
| Comp arative Examp le 6 | 0.0020 | 2.57 | 0.41 | 0.39 | 0.0067 | 0.0017 | 0.0018 | 0.0018 |

Table 1 shows the component compositions of Embodiments 1 to 7 and Comparative Examples 1 to 6.

Referring to Table 1, a hot-rolled sheet with a thickness of about 2.0 mm was manufactured by heating the slab including the component composition shown in Table 1 at 1,120 °C and hot rolling the slab under 880 °C of FDT conditions. In addition, a hot-rolled annealed sheet was manufactured by performing preliminary annealing on the manufactured hot-rolled sheet at 975 °C for 60 seconds. Thereafter, a cold-rolled sheet having a thickness of 0.50t was manufactured by cold-rolling the manufactured hot-rolled annealed sheet, and cold annealing was performed on the manufactured cold-rolled sheet at 950 °C for 45 seconds. At this time, cold annealing was performed in a mixture atmosphere of 30 % of hydrogen and 70 % of nitrogen, and a heating rate was 20 °C/s and a cooling rate was 30 °C/s. Thereafter, the final product (e.g., the non-oriented electrical steel sheet) was manufactured through the coating step.

[Table 2]

| Classific ation | Value of <Equation 1> $(0.1 \leq 1.3 \times [Mn]-0.46 \times [Al] \leq 0.18)$ | Microstructure after preliminary annealing | | | |
|---|---|---|---|---|---|
| | | $GS_1$ $(\mu m)$ | $GS_2$ $(\mu m)$ | Value of <Equation 2> $(0.7 \leq GS_1/GS_2 \leq 0.9)$ | Aspect Ratio |
| Embodim ent 1 | 0.121 | 138 | 171 | 0.81 | 0.49 |

(continued)

| Classific ation | Value of <Equation 1> $(0.1 \leq 1.3 \times [Mn]-0.46 \times [Al] \leq 0.18)$ | Microstructure after preliminary annealing | | | |
|---|---|---|---|---|---|
| | | $GS_1$ $(\mu m)$ | $GS_2$ $(\mu m)$ | Value of <Equation 2> $(0.7 \leq GS_1/GS_2 \leq 0.9)$ | Aspect Ratio |
| Embodim ent 2 | 0.161 | 153 | 183 | 0.84 | 0.54 |
| Embodim ent 3 | 0.133 | 141 | 190 | 0.74 | 0.48 |
| Embodim ent 4 | 0.102 | 144 | 188 | 0.77 | 0.52 |
| Embodim ent 5 | 0.176 | 150 | 190 | 0.79 | 0.49 |
| Embodim ent 6 | 0.128 | 139 | 182 | 0.76 | 0.50 |
| Embodim ent 7 | 0.136 | 145 | 178 | 0.81 | 0.53 |
| Compara tive Example 1 | 0.060 | 115 | 220 | 0.52 | 0.41 |
| Compara tive Example 2 | 0.017 | 99 | 200 | 0.50 | 0.45 |
| Compara tive Example 3 | 0.282 | 101 | 210 | 0.48 | 0.44 |
| Compara tive Example 4 | 0.194 | 77 | 176 | 0.44 | 0.42 |
| Compara tive Example 5 | 0.061 | 82 | 168 | 0.49 | 0.41 |
| Compara tive Example 6 | 0.353 | 90 | 180 | 0.50 | 0.43 |

Table 2 shows whether Embodiments 1 to 7 and Comparative Examples 1 to 6 satisfy Equation 1, Equation 2, and the aspect ratio.

In Table 2, $GS_1$ denotes the average grain size at the point t/4 (t denotes the thickness of the hot-rolled annealed sheet) in the thickness direction from the surface of the hot-rolled annealed sheet, and $GS_2$ denotes the average grain size at the point t/2 (t denotes the thickness of the hot-rolled annealed sheet) in the thickness direction from the surface of the hot-rolled annealed sheet. In other words, $GS_1$ denotes the average grain size at the surface layer of the hot-rolled annealed sheet (the point t/4 in the thickness direction from the surface of the hot-rolled sheet), and $GS_2$ denotes the average grain size at the central layer of the hot-rolled annealed sheet (the point t/2 in the thickness direction from the surface of the hot-rolled sheet).

In addition, in Table 2, the aspect ratio means a ratio of the length $L_1$ of the short axis of the grains and the length $L_2$ of the long axis at the point t/2 (t is the thickness of the hot-rolled annealed sheet) in the thickness direction from the surface of the hot-rolled annealed sheet. In other words, the aspect ratio means the ratio of the length $L_1$ of the short axis of the grains and the length $L_2$ of the long axis at the central layer of the hot-rolled annealed sheet (the point t/2 in the thickness direction from the surface of the hot-rolled sheet).

Referring to Table 2, it may be seen that the component composition of manganese (Mn) and aluminum (Al) included in the slabs of Embodiments 1 to 7 satisfies Equation 1 $(0.10 \leq 1.3 \times [Mn] - 0.46 \times [Al] \leq 0.18)$. However, it may be seen that the component composition of manganese (Mn) and aluminum (Al) included in the slabs of Comparative Examples 1 to 6 do not satisfy Equation 1 $(0.10 \leq 1.3 \times [Mn] - 0.46 \times [Al] \leq 0.18)$.

In addition, in the case of Embodiments 1 to 7, it may be seen that the value of $(GS_1 / GS_2)$ is 0.7 to 0.9, and the aspect ratio is 0.48 or more, so that Embodiments 1 to 7 satisfy Equation 2 $(0.7 \leq GS_1 / GS_2 \leq 0.9)$ and the aspect ratio satisfies 0.48 or more. However, in the case of Comparative Examples 1 to 6, it may be seen that the value of $(GS_1 / GS_2)$ is less than 0.7 and the aspect ratio is less than 0.48, so that Comparative Examples 1 to 6 do not satisfy Equation 2 $(0.7 \leq GS_1 / GS_2 \leq 0.9)$ and the aspect ratio does not satisfy the desired condition.

[Table 1]

| Classific ation | Magnetic measurement results | |
|---|---|---|
| | B50 (T) | W15/50 (W/kg) |
| Embodi ment 1 | 1.700 | 2.78 |
| Embodi ment 2 | 1.680 | 2.61 |
| Embodi ment 3 | 1.695 | 2.74 |

(continued)

| Classific ation | Magnetic measurement results | |
|---|---|---|
| | B50 (T) | W15/50 (W/kg) |
| Embodi ment 4 | 1.684 | 2.68 |
| Embodi ment 5 | 1.691 | 2.64 |
| Embodi ment 6 | 1.688 | 2.66 |
| Embodi ment 7 | 1.683 | 2.62 |
| Compar ative Exampl e 1 | 1.667 | 2.97 |
| Compar ative Exampl e 2 | 1.676 | 2.81 |
| Compar ative Exampl e 3 | 1.671 | 2.85 |
| Compar ative Exampl e 4 | 1.641 | 2.89 |
| Compar ative Exampl e 5 | 1.658 | 2.91 |
| Compar ative Exampl e 6 | 1.655 | 2.95 |

Table 3 shows the magnetic measurement results of Embodiments 1 to 7 and Comparative Examples 1 to 6. For magnetic measurement, an iron loss value and a magnetic flux density value were calculated as average values after measuring in L and C directions through a single sheet tester (SST). In Table 3, B50 is the magnetic flux density at 5000 A/m, and W10/400 is iron loss at a frequency of 50 Hz and magnetic flux density of 1.5 Tesla.

Referring to Table 3, it may be seen that the magnetic flux density (with respect to B50) of all Embodments 1 to 7 is 1.68 T or more. Specifically, it may be seen that the measured magnetic flux density (with respect to B50) of all Embodments 1 to 7 satisfies 1.68 T or more. On the other hand, it may be seen that the magnetic flux density (with respect to B50) of all Comparative Examples 1 to 6 is less than 1.68 T. Specifically, it may be seen that the measured magnetic flux density values of all Comparative Examples 1 to 6 are less than 1.68 T. That is, it may be seen that the magnetic flux density values of Embodments are greater than the magnetic flux density values of Comparative Examples.

In addition, it may be seen that the iron loss (with respect to W15/50) of Embodments 1 to 7 is 2.8 W/kg or less. Specifically, it may be seen that measured iron loss values of Embodments 1 to 7 all satisfy 2.8 W/kg or less. On the other hand, it may be seen that the iron loss (with respect to W15/50) of Comparative Examples 1 to 6 exceeds 2.8 W/kg. Specifically, it may be seen that the measured iron loss values of Comparative Examples 1 to 6 all exceed 2.8 W/kg. That is, it may be seen that the iron loss values of Comparative Examples are greater than the iron loss values of Embodments.

In an embodiment, when the component composition of manganese (Mn) and aluminum (Al) included in the slab satisfies Equation 1 ($0.10 \leq 1.3 \times [Mn] - 0.46 \times [Al] \leq 0.18$), the microstructure after hot rolling and preliminary annealing may be controlled. That is, when the component composition of manganese (Mn) and aluminum (Al) included in the slab satisfies Equation 1 ($0.10 \leq 1.3 \times [Mn] - 0.46 \times [Al] \leq 0.18$), the microstructure of the hot-rolled annealed sheet after preliminary annealing may satisfy Equation 2 ($0.7 \leq GS_1 / GS_2 \leq 0.9$), and the aspect ratio may be 0.48 or more. Specifically, when the component composition of manganese (Mn) and aluminum (Al) included in the slab satisfies Equation 1 ($0.10 \leq 1.3 \times [Mn] - 0.46 \times [Al] \leq 0.18$), the deviation between the average grain size of the surface layer of the hot-rolled annealed sheet and the average grain size of the central layer of the hot-rolled annealed sheet after preliminary annealing may be reduced, and the deviation between the length of the short axis and the length of the long axis of the grains of the central layer of the hot-rolled annealed sheet after preliminary annealing may be reduced, and thus the microstructure of the hot-rolled annealed sheet may be uniformly formed.

In addition, when the microstructure of the hot-rolled annealed sheet after preliminary annealing satisfies Equation 2 ($0.7 \leq GS_1 / GS_2 \leq 0.9$) and the aspect ratio is 0.48 or more, the final product (e.g., the non-oriented electrical steel sheet) may have low iron loss and high magnetic flux density. Specifically, when the microstructure of the hot-rolled annealed sheet after preliminary annealing satisfies Equation 2 ($0.7 \leq GS_1 / GS_2 \leq 0.9$) and the aspect ratio is 0.48 to 0.6, the final product (e.g., the non-oriented electrical steel sheet) may have iron loss of 2.8 W/kg or less and magnetic flux density of 1.68 T or more (with respect to B50).

When the component composition of manganese (Mn) and aluminum (Al) included in the slab satisfies Equation 1 ($0.10 \leq 1.3 \times [Mn] - 0.46 \times [Al] \leq 0.18$), the microstructure of the hot-rolled annealed sheet after preliminary annealing may satisfy Equation 2 ($0.7 \leq GS_1 / GS_2 \leq 0.9$) and the aspect ratio may be 0.48 to 0.6, and when the microstructure of the hot-rolled annealed sheet after preliminary annealing satisfies Equation 2 ($0.7 \leq GS_1 / GS_2 \leq 0.9$) and the aspect ratio is 0.48 or more, the final product (e.g., the non-oriented electrical steel sheet) may have iron loss of 2.8 W/kg or less (with respect to W15/50) and magnetic flux density of 1.68 T or more (with respect to B50). That is, when the component composition of manganese (Mn) and aluminum (Al) included in the slab satisfies Equation 1 ($0.10 \leq 1.3 \times [Mn] - 0.46 \times [Al] \leq 0.18$), the final product (e.g., the non-oriented electrical steel sheet) may have low iron loss and high magnetic flux density.

While the present disclosure has been particularly shown and described with reference to embodiments thereof, they are provided for the purposes of illustration and it will be understood by one of ordinary skill in the art that various modifications and equivalent other embodiments made be made from the present disclosure. Accordingly, the true technical scope of the present disclosure is defined by the technical spirit of the appended claims.

**Claims**

1. A method of manufacturing of a non-oriented electrical steel sheet, the method comprising:

   preparing a slab comprising, by weight%, carbon (C): more than 0 % but not more than 0.002 %, silicon (Si): 2.3 % to 2.8 %, manganese (Mn): 0.2 % to 0.28 %, aluminum (Al): 0.32 % to 0.45 %, phosphorus (P): more than 0 % but not more than 0.015 %, sulfur (S): more than 0 %but not more than 0.002 %, nitrogen (N): more than 0 % but not more than 0.005 %, titanium (Ti): more than 0 % but not more than 0.002 %, a balance of iron (Fe), and inevitable impurities;
   forming a hot-rolled sheet by hot rolling the slab;
   forming a hot-rolled annealed sheet by preliminarily annealing the hot-rolled sheet;
   forming a cold-rolled sheet by cold rolling the hot-rolled annealed sheet; and
   forming a cold-rolled annealed sheet by cold annealing the cold-rolled sheet,
   wherein manganese (Mn) and aluminum (Al) included in the slab satisfy Equation 1 below.

   <Equation 1>

   $$0.10 \leq 1.3 \times [Mn] - 0.46 \times [Al] \leq 0.18$$

   (in Equation 1, [Mn] and [Al] represent weight % of manganese (Mn) and aluminum (Al) included in the slab, respectively.)

2. The method of claim 1, wherein
   an average grain size ($GS_1$) at a point t/4 (t denotes a thickness of the hot-rolled annealed sheet) in a thickness direction from a surface of the hot-rolled annealed sheet, and an average grain size ($GS_2$) at a point t/2 (t denotes the thickness of the hot-rolled annealed sheet) in the thickness direction from the surface of the hot-rolled annealed sheet satisfy Equation 2 below.

   <Equation 2>

   $$0.7 \leq (GS_1 / GS_2) \leq 0.9$$

3. The method of claim 1, wherein
   an aspect ratio of grains at a point t/2 (t denotes a thickness of the hot-rolled annealed sheet) in a thickness direction from a surface of the hot-rolled annealed sheet is 0.48 or more.

4. The method of claim 3, wherein
   the aspect ratio is derived by Equation 3 below:

   <Equation 3>

   $$\text{Aspect Ratio} = (L_1 / L_2)$$

   (in Equation 3, $L_1$ denotes a length of a short axis of the grains at the point t/2 (t denotes the thickness of the hot-rolled annealed sheet) in the thickness direction from the surface of the hot-rolled annealed sheet, and $L_2$ denotes a length of a long axis of the grains at the point t/2 (t denotes the thickness of the hot-rolled annealed sheet) in the thickness direction from the surface of the hot-rolled annealed sheet.)

5. The method of claim 1, further comprising:
forming a coating layer on the cold-rolled annealed sheet.

6. The method of claim 1, wherein

the forming of the hot-rolled annealed sheet by preliminarily annealing the hot-rolled sheet includes annealing the hot-rolled sheet at a soaking temperature of 950 °C to 1,100 °C.

7. The method of claim 1, wherein

the forming of the cold-rolled annealed sheet by cold annealing the cold-rolled sheet includes annealing the cold-rolled sheet at a soaking temperature of 900 °C to 1,100 °C.

8. A non-oriented electrical steel sheet comprising:

by weight%, carbon (C): more than 0 % but not more than 0.002 %, silicon (Si): 2.3 % to 2.8 %, manganese (Mn): 0.2 % to 0.28 %, aluminum (Al): 0.32 % to 0.45 %, phosphorus (P): more than 0 % but not more than 0.015 %, sulfur (S): more than 0 % but not more than 0.002 %, nitrogen (N): more than 0 % but not more than 0.005 %, titanium (Ti): more than 0 % but not more than 0.002 %, a balance of iron (Fe), and inevitable impurities, wherein manganese (Mn) and aluminum (Al) included in the non-oriented electrical steel sheet satisfy Equation 4 below.

<Equation 4>

$$0.10 \leq 1.3 \times [Mn] - 0.46 \times [Al] \leq 0.18$$

(in Equation 4, [Mn] and [Al] represent weight% of manganese (Mn) and aluminum (Al) included in the non-oriented electrical steel sheet, respectively.)

9. The non-oriented electrical steel sheet of claim 8, wherein
the non-oriented electrical steel sheet has iron loss of 2.8 W/kg or less (with respect to W15/50) and magnetic flux density of 1.68 T or more (with respect to B50).

10. The non-oriented electrical steel sheet of claim 8, wherein
the non-oriented electrical steel sheet has a yield strength (YP) of 350 MPa or more and a tensile strength (TS) of 450 MPa or more.

# FIG. 1

```
┌─────────────────────┐
│   HOT ROLLING STEP  │──── S100
└─────────────────────┘
          │
          ▼
┌─────────────────────┐
│     PRELIMINARY     │──── S200
│   ANNEALING STEP    │
└─────────────────────┘
          │
          ▼
┌─────────────────────┐
│  COLD ROLLING STEP  │──── S300
└─────────────────────┘
          │
          ▼
┌─────────────────────┐
│ COLD ANNEALING STEP │──── S400
└─────────────────────┘
          │
          ▼
┌─────────────────────┐
│    COATING STEP     │──── S500
└─────────────────────┘
```

## INTERNATIONAL SEARCH REPORT

| | International application No. |
|---|---|
| | **PCT/KR2023/014430** |

| A. | CLASSIFICATION OF SUBJECT MATTER |
|---|---|

**C22C 38/02**(2006.01)i; **C22C 38/04**(2006.01)i; **C22C 38/06**(2006.01)i; **C22C 38/14**(2006.01)i; **C22C 38/00**(2006.01)i; **C21D 8/12**(2006.01)i; **H01F 1/147**(2006.01)i

According to International Patent Classification (IPC) or to both national classification and IPC

| B. | FIELDS SEARCHED |
|---|---|

Minimum documentation searched (classification system followed by classification symbols)

C22C 38/02(2006.01); C21D 8/12(2006.01); C21D 9/00(2006.01); C21D 9/46(2006.01); C22C 38/00(2006.01); C22C 38/06(2006.01); C22C 38/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성(non-oriented), 전기강판(electrical steel sheet), 결정립(grain), 종횡비(aspect ratio), 알루미늄(aluminum), 실리콘(silicon), 망간(manganese)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2019-199643 A (NIPPON STEEL CORP.) 21 November 2019 (2019-11-21)<br>See paragraphs [0025]-[0028], [0031], [0041], [0056], [0059]-[0061] and [0071]-[0079] and claims 3-4. | 8 |
| Y | | 1-7,9-10 |
| Y | KR 10-2022-0089073 A (POSCO) 28 June 2022 (2022-06-28)<br>See paragraphs [0087]-[0088] and [0100]. | 1-7,9-10 |
| A | JP 2020-509184 A (POSCO) 26 March 2020 (2020-03-26)<br>See paragraph [0049] and claim 8. | 1-10 |
| A | WO 2021-006280 A1 (JFE STEEL CORPORATION) 14 January 2021 (2021-01-14)<br>See claims 1 and 5. | 1-10 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 December 2023** | **28 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/014430** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2002-371340 A (SUMITOMO METAL IND. LTD.) 26 December 2002 (2002-12-26)<br>See paragraph [0071] and claim 1. | 1-10 |

Form PCT/ISA/210 (second sheet) (July 2022)

EP 4 592 418 A1

INTERNATIONAL SEARCH REPORT
Information on patent family members

International application No.

**PCT/KR2023/014430**

| Patent document cited in search report | | | Publication date (day/month/year) | Patent family member(s) | | | Publication date (day/month/year) |
|---|---|---|---|---|---|---|---|
| JP | 2019-199643 | A | 21 November 2019 | JP | 7127358 | B2 | 30 August 2022 |
| KR | 10-2022-0089073 | A | 28 June 2022 | CN | 116897218 | A | 17 October 2023 |
| | | | | EP | 4265802 | A1 | 25 October 2023 |
| | | | | KR | 10-2023-0125156 | A | 29 August 2023 |
| | | | | WO | 2022-139314 | A1 | 30 June 2022 |
| JP | 2020-509184 | A | 26 March 2020 | CN | 110088327 | A | 02 August 2019 |
| | | | | CN | 110088327 | B | 17 June 2022 |
| | | | | EP | 3556883 | A1 | 23 October 2019 |
| | | | | EP | 3556883 | B1 | 09 February 2022 |
| | | | | JP | 6842546 | B2 | 17 March 2021 |
| | | | | KR | 10-1904309 | B1 | 04 October 2018 |
| | | | | KR | 10-2018-0071104 | A | 27 June 2018 |
| | | | | US | 11111557 | B2 | 07 September 2021 |
| | | | | US | 2020-0087750 | A1 | 19 March 2020 |
| | | | | WO | 2018-117600 | A1 | 28 June 2018 |
| WO | 2021-006280 | A1 | 14 January 2021 | CN | 114040989 | A | 11 February 2022 |
| | | | | EP | 3998358 | A1 | 18 May 2022 |
| | | | | JP | 6825758 | B1 | 03 February 2021 |
| | | | | JP | WO2021-006280 | A1 | 14 January 2021 |
| | | | | KR | 10-2022-0002546 | A | 06 January 2022 |
| | | | | MX | 2022000467 | A | 03 February 2022 |
| | | | | TW | 202104614 | A | 01 February 2021 |
| | | | | TW | I718973 | B | 11 February 2021 |
| | | | | US | 2022-0359108 | A1 | 10 November 2022 |
| JP | 2002-371340 | A | 26 December 2002 | JP | 3870725 | B2 | 24 January 2007 |

Form PCT/ISA/210 (patent family annex) (July 2022)

**REFERENCES CITED IN THE DESCRIPTION**

**Patent documents cited in the description**

•   KR 101141283